# EUROPEAN PATENT APPLICATION

(11) **EP 4 618 227 A1**
(43) Date of publication of application: **17.09.2025**
(21) Application number: 24743641.3
(22) Date of filing: 30.05.2024
(51) Int. Cl.: H01M 10/0587, H01M 10/0525, H01M 10/052, H01M 10/42, H01M 50/107, H01M 50/119, H01M 50/152

(54) **LOW-VOLTAGE LITHIUM BATTERY**

(30) Priority: 02.02.2024 CN 202410147169
(71) Applicant: Hamedata Technology Co., Limited, Shenzhen, Guangdong 518118 (CN)
(72) Inventor: YANG, Changjun, Shenzhen, Guangdong 518118 (CN); XIAO, Pengfei, Shenzhen, Guangdong 518118 (CN); ZHAO, Jian, Shenzhen, Guangdong 518118 (CN); ZHOU, Wei, Shenzhen, Guangdong 518118 (CN); HOU, Qiang, Shenzhen, Guangdong 518118 (CN)
(74) Representative: Ullrich & Naumann PartG mbB
(86) International application number: PCT/CN2024/096421
(87) International publication number: WO 2025/161217

(57) **Abstract**

The present application relates to a low-voltage lithium battery, including a circuit assembly, a middle plastic frame, a wound battery core assembly, a metal housing and an insulating sheath, wherein the circuit assembly includes a PCB, an outer conductive cap and an inner conductive cap, a front surface of the PCB is provided with a positive copper ring and a negative copper ring, the positive copper ring is electrically connected with the outer conductive cap, the negative copper ring is electrically connected with the metal housing, a back surface of the PCB is provided with a high-voltage input copper ring, the high-voltage input copper ring is electrically connected with the inner conductive cap, a positive tab of the wound battery core assembly is electrically connected with the inner conductive cap, and a negative tab is electrically connected with the metal housing. By arranging the positive copper ring, the negative copper ring and the high-voltage input copper ring on the PCB, circuit connection of the wound battery core assembly and the PCB and circuit connection of a low-voltage output element and the PCB are realized, conductive cables are avoided, stability of an electrical performance is higher, an internal connection structure of the lithium battery is simplified, safety is higher, and industrialization can be realized.

## Description

### FILED OF THE INVENTION

The present application relates to the field of lithium battery technologies, and in particular, to a low-voltage lithium battery.

### BACKGROUND OF THE INVENTION

Chinese Patent Application No. CN203787480U titled "Variable-Voltage Cylindrical Battery Apparatus" discloses a low-voltage lithium battery, which changes a high voltage (3.0-4.2V) of a lithium battery into a low voltage of 1.5V through a voltage drop circuit board to replace a common alkaline battery and nickel-metal hydride battery, and can be widely used in various devices, such as remote controllers, electric toys, electric toothbrushes, shavers, wireless microphones, doorbells, or the like, after manufactured according to sizes of an AA battery, an AAA battery, or the like. A lithium battery core has the advantages of no memory effect, high energy density and long service life, and greatly improved universality after a voltage drop. However, this application suffers from unreasonable structure and relatively low stability of an electrical performance, and thus can only be considered as a conceptual innovation, difficult for industrialization.

Chinese Patent Application No. CN204966611U titled "1.5V Constant-Voltage Lithium Ion Battery" discloses a voltage drop circuit, which can constantly output a low voltage of 1.5V while achieving charge and discharge functions by using a same port. However, it fails to disclose a specific assembly structure in detail, also difficult for industrialization.

### SUMMARY

In order to realize industrialization of an existing low-voltage lithium battery, the present invention provides a low-voltage lithium battery.

The technical solution provided by the present application is as follows: a low-voltage lithium battery includes a circuit assembly, a middle plastic frame, a wound battery core assembly, a metal housing and an insulating sheath, wherein the circuit assembly, the middle plastic frame and the wound battery core assembly are sequentially arranged in the metal housing from top to bottom, the insulating sheath covers the metal housing, the circuit assembly includes a PCB, an outer conductive cap and an inner conductive cap, a front surface of the PCB is provided with a positive copper ring and a negative copper ring, the positive copper ring is electrically connected with the outer conductive cap, the negative copper ring is electrically connected with the metal housing, a back surface of the PCB is provided with a high-voltage input copper ring, the high-voltage input copper ring is electrically connected with the inner conductive cap, a positive tab of the wound battery core assembly is electrically connected with the inner conductive cap, and a negative tab is electrically connected with the metal housing.

The PCB in the circuit assembly in the present application is also provided with necessary circuits, such as a voltage drop circuit, a voltage stabilizing circuit, a charging circuit, an over-discharge protection circuit, or the like, the outer conductive cap is used as a positive electrode of the battery, the metal housing is used as a negative electrode of the battery, a low voltage can be stably output, and a same-port charge and discharge function is achieved; the outer conductive cap and the inner conductive cap are arranged simultaneously, and by arranging the positive copper ring, the negative copper ring and the high-voltage input copper ring on the PCB, circuit connection of the wound battery core assembly and the PCB and circuit connection of a low-voltage output element and the PCB are realized, conductive cables are avoided, stability of an electrical performance is higher, an internal connection structure of the lithium battery is simplified, a problem is not prone to occurrence, safety is higher, and industrialization and large-scale production can be realized.

Preferably, a rolling groove is inwardly provided in an upper portion of the metal housing and configured to limit the wound battery core assembly to move in the metal housing and support the middle plastic frame.

Preferably, a spun edge is inwardly provided on the metal housing and configured to tightly press the middle plastic frame, a positive and negative electrode isolating piece is further pasted above the spun edge, and part of an upper surface of the positive and negative electrode isolating piece is further wrapped by the insulating sheath.

Preferably, an inner wall of the middle plastic frame is provided with a flange edge for supporting the PCB.

Preferably, a pouring sealant is further arranged between the inner conductive cap and the middle plastic frame to form sealing, so as to isolate an electrolyte.

Preferably, the circuit assembly further includes an elastic ring, the elastic ring includes a base ring and fins uniformly distributed on a periphery of the base ring, a back surface of the base ring is welded on the negative copper ring by a patch, and the fins are elastically pressed on the spun edge of the metal housing.

Preferably, the outer conductive cap and the inner conductive cap are both welded on the PCB by patches.

Preferably, electronic elements on the PCB are centrally arranged in the outer conductive cap and the inner conductive cap.

Preferably, the wound battery core assembly includes a wound battery core, an upper isolating piece and a lower isolating piece, the positive tab penetrates out of a central hole of the upper isolating piece, and an end portion of the positive tab is welded to a lower surface of the inner conductive cap; and the negative tab is wound from a side surface to a bottom surface of the wound battery core, and an end portion of the negative tab is welded to a bottom wall of the metal housing.

In summary, the present application has at least one of the following beneficial effects.

1. The PCB in the circuit assembly in the present application is also provided with the necessary circuits, such as the voltage drop circuit, the voltage stabilizing circuit, the charging circuit, the over-discharge protection circuit, or the like, the outer conductive cap is used as the positive electrode of the battery, the metal housing is used as the negative electrode of the battery, the low voltage can be stably output, and the same-port charge and discharge function is achieved;

2. in the present application, the outer conductive cap and the inner conductive cap are arranged, the positive copper ring, the negative copper ring and the high-voltage input copper ring are arranged on the PCB, the conductive cables are avoided, and the stability of the electrical performance is higher;

3. in the present application, the internal connection structure of the lithium battery is simplified, the problem is not prone to occurrence, the safety is higher, and industrialization and large-scale production can be realized.

### BRIEF DESCRIPTION OF THE DRAWINGS

FIG. 1 is a perspective view of a low-voltage lithium battery according to an embodiment of the present application;
FIG. 2 is a schematic diagram of a half-section structure of a low-voltage lithium battery according to an embodiment of the present application;
FIG. 3 is an enlarged view of Portion A in FIG. 2;
FIG. 4 is an enlarged view of Portion B in FIG. 2;
FIG. 5 is a front perspective view of a PCB in an embodiment of the present application;
FIG. 6 is a back perspective view of the PCB in an embodiment of the present application;
FIG. 7 is a perspective view of a wound battery core assembly in an embodiment of the present application;
FIG. 8 is a schematic diagram of an operation of assembling a circuit assembly in an embodiment of the present application;
FIG. 9 is a schematic diagram of an operation of assembling the circuit assembly and a middle plastic frame in an embodiment of the present application;
FIG. 10 is a front perspective view of assembled circuit assembly and middle plastic frame in an embodiment of the present application;
FIG. 11 is a back perspective view of assembled circuit assembly and middle plastic frame in an embodiment of the present application; and
FIG. 12 is a schematic diagram after adhesive dispensing between the circuit assembly and the middle plastic frame in an embodiment of the present application.

Reference numerals: 1. Circuit Assembly; 11. PCB; 111. Positive Copper Ring; 112. Negative Copper Ring; 113. High-Voltage Input Copper Ring; 12. Outer Conductive Cap; 13. Inner Conductive Cap; 14. Elastic Ring; 141. Base Ring; 142. Fin; 2. middle plastic Frame; 21. Flange Edge; 3. Wound Battery Core Assembly; 31. Positive Tab; 32. Negative Tab; 33. Wound Battery Core; 34. Upper isolating piece; 35. Lower isolating piece; 4. Metal housing; 41. rolling groove; 42. Spun Edge; 5. Insulating Sheath; 6. Positive And Negative Electrode isolating piece; 7. Pouring Sealant; 100. Spinning Knife.

### DETAILED DESCRIPTION

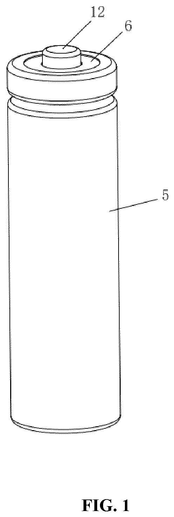

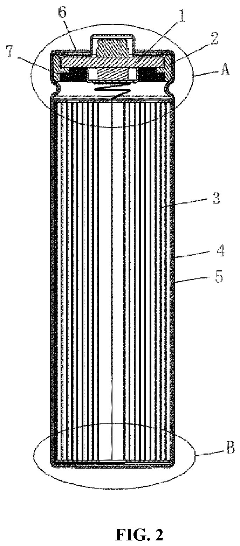

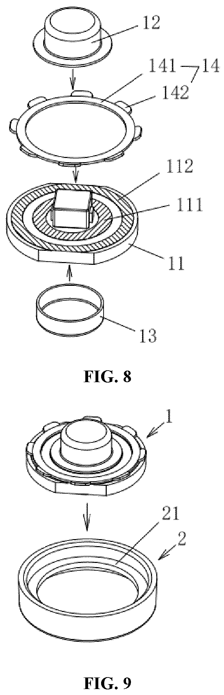

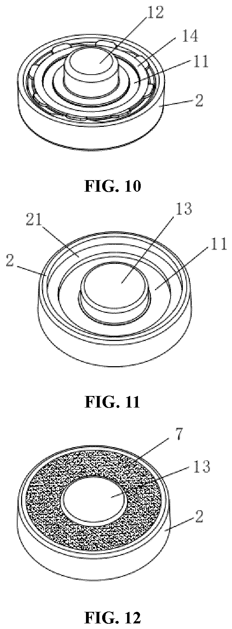

The present application is described in further detail below with reference to FIGs. 1 to 12.

Referring to FIGs. 1 to 4, an embodiment of the present application discloses a low-voltage lithium battery, including a circuit assembly 1, a middle plastic frame 2, a wound battery core assembly 3, a metal housing 4 and an insulating sheath 5. The circuit assembly 1, the middle plastic frame 2 and the wound battery core assembly 3 are sequentially arranged in the metal housing 4 from top to bottom, and the insulating sheath 5 covers the metal housing 4. The circuit assembly 1 includes a PCB 11, an outer conductive cap 12 and an inner conductive cap 13. A front surface of the PCB 11 is provided with a positive copper ring 111 and a negative copper ring 112, the positive copper ring 111 is electrically connected with the outer conductive cap 12, and the negative copper ring 112 is electrically connected with the metal housing 4. A back surface of the PCB 11 is provided with a high-voltage input copper ring 113, and the high-voltage input copper ring 113 is electrically connected with the inner conductive cap 13. A positive tab 31 of the wound battery core assembly 3 is electrically connected with the inner conductive cap 13, and a negative tab 32 is electrically connected with the metal housing 4.

In the present embodiment, the wound battery core assembly 3 may be a ternary wound battery core assembly or an iron phosphate wound battery core assembly commonly available in the market, and certainly, other types of wound battery core assemblies may be selected. A voltage range is between 3.0V and 4.2V, and after a voltage drop by the PCB 11, 1.5V is preferably output, and other voltage values, such as 1.2V, 2.0V, or the like, may be output according to actual needs. Various functional circuits on the PCB 11 are already known in the prior art, not substantially improved in the present application, and thus not described here. The insulating sheath 5 in the present application is preferably made of PVC, has the characteristic of thermal shrinkage, and can tightly wrap the metal housing 4 by blowing hot air. The PCB 11 in the present application is characterized in that the front surface is provided with the positive copper ring 111 and the negative copper ring 112, the back surface is provided with the high-voltage input copper ring 113, the positive copper ring 111 is used as a low-voltage output positive electrode, the high-voltage input copper ring 113 is used as a high-voltage input positive electrode, the negative copper ring 112 is used as a common negative electrode, and by electrically connecting the three copper rings with an external conductive component, high-voltage input and low-voltage output functions are achieved without the need of arranging any conductive cable.

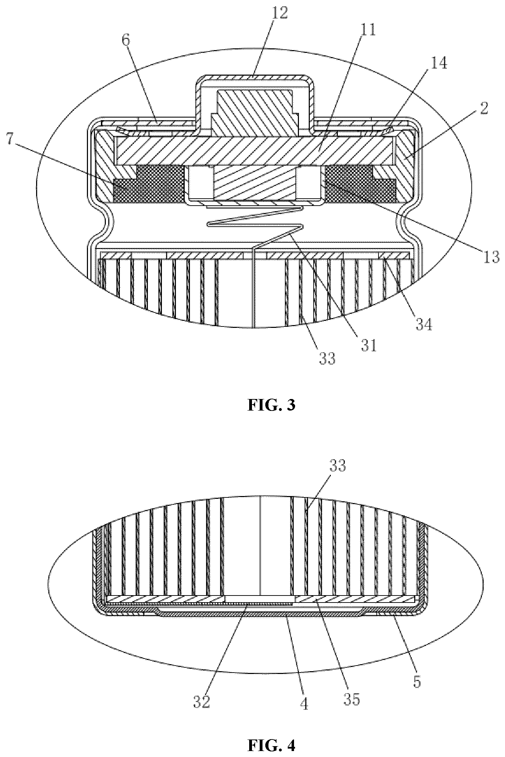

Referring to FIG. 3, the circuit assembly 1 further includes an elastic ring 14, the elastic ring 14 includes a base ring 141 and fins 142 evenly arranged on a periphery of the base ring 141, a back surface of the base ring 141 is welded on the negative copper ring 112 by a patch, the fins 142 are elastically pressed on a spun edge 42 of the metal housing 4, and the elastic pressing can avoid the situation that pressing of the metal housing 4 and the negative copper ring 112 on the PCB 11 is not tight, or the negative copper ring 112 is crushed.

Referring to FIG. 3, the outer conductive cap 12 and the inner conductive cap 13 are both welded on the PCB 11 by patches. Firstly, connection strength is good, and fixation is reliable; and secondly, a junction has a large sectional area and a small resistance, and a conductive performance is good. Electronic elements on the PCB 11 are preferably and centrally arranged in the outer conductive cap 12 and the inner conductive cap 13, such that firstly, the electronic elements are arranged reasonably, and inner spaces of the outer conductive cap 12 and the inner conductive cap 13 are fully utilized; secondly, the outer conductive cap 12 and the inner conductive cap 13 have good strength and can have a protection effect, and the electronic elements are not in contact with the outside and cannot be damaged; thirdly, a sealing effect is achieved, water and dust are prevented, and service life of the PCB 11 is prolonged. In the present application, the electronic element in the inner conductive cap 13 is a three-in-one voltage drop chip, which belongs to the prior art and has the advantages of a high integration level and a small volume, and the PCB 11 is easier to design; the electronic elements inside the outer conductive cap 12 include an inductor, a capacitor, a resistor, or the like. In addition, since the outer conductive cap 12 is exposed and required to contact the outside, the outer conductive cap is prone to be impacted and requires a fixed connection mode with higher strength, and thus, particularly, a flange edge is arranged on the outer conductive cap 12, and the flange edge has a certain width which is several times of a wall thickness of the outer conductive cap 12, and therefore, an area of contact with the positive copper ring 111 is large, and fixation is firm and resistant to an impact. The inner conductive cap 13 is not exposed and not subjected to an external impact, and has a slightly low strength requirement, and therefore, the flange edge is not required.

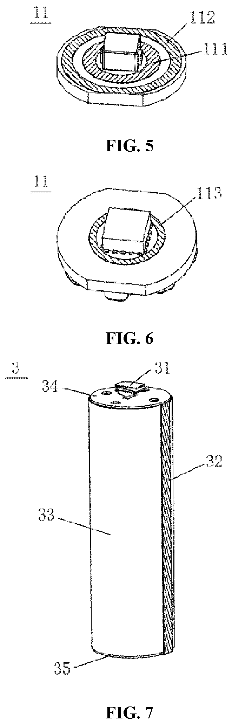

Referring to FIG. 7, the wound battery core assembly 3 includes a wound battery core 33, an upper isolating piece 34 and a lower isolating piece 35, the positive tab 31 penetrates out of a central hole of the upper isolating piece 34, and an end portion of the positive tab is welded to a lower surface of the inner conductive cap 13; and the negative tab 32 is wound from a side surface to a bottom surface of the wound battery core 33, and an end portion of the negative tab is welded to a bottom wall of the metal housing 4.

A circuit has the specific connection principle that the positive tab 31 of the wound battery core assembly 3 is connected to the PCB 11 through the inner conductive cap 13 and the high-voltage input copper ring 113, the negative tab 32 of the wound battery core assembly 3 is connected to the PCB 11 through the metal housing 4, the elastic ring 14 and the negative copper ring 112, and after a voltage drop by the circuit on the PCB 11, a positive electrode of the lithium battery is output from the positive copper ring 111 and the outer conductive cap 12, and a negative electrode of the lithium battery is output from the negative copper ring 112, the elastic ring 14 and the metal housing 4.

Referring to FIG. 3, a rolling groove 41 is inwardly provided in an upper portion of the metal housing 4 and configured to limit the wound battery core assembly 3 to move in the metal housing 4 and support the middle plastic frame 2. The spun edge 42 is inwardly provided on the metal housing 4 and configured to tightly press the middle plastic frame 2, a positive and negative electrode isolating piece 6 is further pasted above the spun edge 42, the positive and negative electrode isolating piece 6 can stop sundries, such as dust, from entering a position between the elastic ring 14 and the outer conductive cap 12, so as to avoid a short circuit therebetween, and part of an upper surface of the positive and negative electrode isolating piece 6 is further wrapped by the insulating sheath 5 to further fix the positive and negative electrode isolating piece 6.

In the present application, the wound battery core 33 is directly placed in the metal housing 4, and compared with a soft-package lithium battery core or a hard-shell lithium battery core in the prior art, a wrapping housing is omitted, and a cost is lower. By arranging the rolling groove 41, the wound battery core assembly 3 is sealed, and the electrolyte is not prone to leak; the spun edge 42 at an upper end tightly presses and seals the middle plastic frame 2 to realize integrated sealing.

Referring to FIG. 3, an inner wall of the middle plastic frame 2 is provided with a flange edge 21 for supporting the PCB 11. A pouring sealant 7 is further arranged between the inner conductive cap 13 and the middle plastic frame 2 to form sealing, so as to isolate the electrolyte and avoid that the electrolyte contacts the PCB 11 to cause corrosion to result in premature failure of the PCB 11. By controlling a thickness and a section shape of the pouring sealant 7, the pouring sealant 7 can have certain strength, and when failure exists in the wound battery core assembly 3, a temperature rises, an air pressure is increased, and when the air pressure reaches a certain threshold, the pouring sealant 7 can be broken to release the pressure, so as to avoid an explosion of the lithium battery due to overpressure.

The insulating sheath 5 is preferably made of PVC, and wraps the metal housing 4 by thermal shrinkage.

The present application has the implementation principle that the PCB 11 in the circuit assembly 1 in the present application is also provided with necessary circuits, such as a voltage drop circuit, a voltage stabilizing circuit, a charging circuit, an over-discharge protection circuit, or the like, the outer conductive cap 12 is used as a positive electrode of the battery, the metal housing 4 is used as a negative electrode of the battery, a low voltage can be stably output, and a same-port charge and discharge function is achieved; the outer conductive cap 12 and the inner conductive cap 13 are arranged simultaneously, and by arranging the positive copper ring 111, the negative copper ring 112 and the high-voltage input copper ring 113 on the PCB 11, circuit connection of the wound battery core assembly 3 and the PCB 11 and circuit connection of a low-voltage output element and the PCB 11 are realized, conductive cables are avoided, stability of an electrical performance is higher, an internal connection structure of the lithium battery is simplified, a problem is not prone to occurrence, safety is higher, and a manufacturing method in the present application has a reasonable process and a high yield, and can realize industrialization and large-scale production.

The above embodiments are preferred embodiments of the present application, and the protection scope of the present application is not limited thereby, and therefore, equivalent changes made according to the structure, shape and principle of the present application shall be covered by the protection scope of the present application.

## Claims

1. A low-voltage lithium battery, **characterized by** comprising a circuit assembly (1), a middle plastic frame (2), a wound battery core assembly (3), a metal housing (4) and an insulating sheath (5), wherein the circuit assembly (1), the middle plastic frame (2) and the wound battery core assembly (3) are sequentially arranged in the metal housing (4) from top to bottom, the insulating sheath (5) covers the metal housing (4), the circuit assembly (1) comprises a PCB (11), an outer conductive cap (12) and an inner conductive cap (13), a front surface of the PCB (11) is provided with a positive copper ring (111) and a negative copper ring (112), the positive copper ring (111) is electrically connected with the outer conductive cap (12), the negative copper ring (112) is electrically connected with the metal housing (4), a back surface of the PCB (11) is provided with a high-voltage input copper ring (113), the high-voltage input copper ring (113) is electrically connected with the inner conductive cap (13), a positive tab (31) of the wound battery core assembly (3) is electrically connected with the inner conductive cap (13), and a negative tab (32) is electrically connected with the metal housing (4).

2. The low-voltage lithium battery according to claim 1, **characterized in that**, a rolling groove (41) is inwardly provided in an upper portion of the metal housing (4) and configured to limit the wound battery core assembly (3) to move in the metal housing (4) and support the middle plastic frame (2).

3. The low-voltage lithium battery according to claim 2, **characterized in that**, a spun edge (42) is inwardly provided on the metal housing (4) and configured to tightly press the middle plastic frame (2), a positive and negative electrode isolating piece (6) is further pasted above the spun edge (42), and part of an upper surface of the positive and negative electrode isolating piece (6) is further wrapped by the insulating sheath (5).

4. The low-voltage lithium battery according to claim 2, **characterized in that**, an inner wall of the middle plastic frame (2) is provided with a flange edge (21) for supporting the PCB (11).

5. The low-voltage lithium battery according to claim 4, **characterized in that**, a pouring sealant (7) is further arranged between the inner conductive cap (13) and the middle plastic frame (2) to form sealing, so as to isolate an electrolyte.

6. The low-voltage lithium battery according to claim 3, **characterized in that**, the circuit assembly (1) further comprises an elastic ring (14), the elastic ring (14) comprises a base ring (141) and fins (142) uniformly distributed on a periphery of the base ring (141), a back surface of the base ring (141) is welded on the negative copper ring (112) by a patch, and the fins (142) are elastically pressed on the spun edge (42) of the metal housing (4).

7. The low-voltage lithium battery according to claim 1, **characterized in that**, the outer conductive cap (12) and the inner conductive cap (13) are both welded on the PCB (11) by patches.

8. The low-voltage lithium battery according to claim 7, **characterized in that**, electronic elements on the PCB (11) are centrally arranged in the outer conductive cap (12) and the inner conductive cap (13).

9. The low-voltage lithium battery according to claim 1, **characterized in that**, the wound battery core assembly (3) comprises a wound battery core (33), an upper isolating piece (34) and a lower isolating piece (35), the positive tab (31) penetrates out of a central hole of the upper isolating piece (34), and an end portion of the positive tab is welded to a lower surface of the inner conductive cap (13); and the negative tab (32) is wound from a side surface to a bottom surface of the wound battery core (33), and an end portion of the negative tab is welded to a bottom wall of the metal housing (4).
